# EUROPÄISCHE PATENTANMELDUNG

(11) **EP 1 040 949 A2**
(43) Veröffentlichungstag der Anmeldung: **04.10.2000**
(21) Anmeldenummer: 00103761.3
(22) Anmeldetag: 23.02.2000
(51) Int. Cl.: B60J 1/18

(54) **Klapp- bzw. Faltverdeck für Kraftfahrzeuge mit einem äusseren Verdeckbezug und mindestens einer an diesem angeordneten Scheibe**

(30) Priorität: 30.03.1999 DE 19914599; 21.02.2000 DE 10007575
(71) Anmelder: PARAT Automotive, Schönenbach GmbH + Co. KG, 42897 Remscheid (DE)
(72) Erfinder: Windpassinger, Martin, 94051 Hauzenberg (DE); Krieg, Heinrich, 94089 Neureichenau (DE)
(74) Vertreter: Patentanwälte Ostriga & Sonnet

(57) **Zusammenfassung**

Dargestellt und beschrieben ist ein Klapp- bzw. Faltverdeck für Kraftfahrzeuge wie Kabrioletts od.dgl., mit einem äußeren Verdeckbezug (12) und mindestens einer in einem Ausschnitt desselben angeordneten Scheibe (10), deren umlaufender Rand (11) mittels eines Gießharz-Elements mit dem umlaufenden Rand (13) des äußeren Verdeckbezugs (12) verbunden ist. Der umlaufende Rand (13) des äußeren Verdeckbezugs (12) ist mit einem rahmenartigen Profil (14) als Gießharz-Element versehen, welches sich zumindest überwiegend, vorzugsweise gänzlich, auf der zum Fahrzeuginnern (I) weisenden Seite erstreckt.

Damit bei Betrachtung von außen der ästhetisch vorteilhafte Eindruck entsteht, als sei die Scheibe (10) unmittelbar in den Verdeckstoff (12) eingearbeitet, werden drei grundlegende Lösungen vorgeschlagen. Entweder ist auf den nach außen weisenden umlaufenden Rand (11) des äußeren Verdeckstoffs (12) die Scheibe (10) mit ihrem Rand (11) aufgeklebt oder der Verdeckstoffrand (13) auf den Scheibenrand (11), wobei das Verkleben auch allein oder zusätzlich durch das Kunststoffmaterial des Gießharz-Elements (14) erfolgen kann. Bei der dritten Alternative überlappen sich Verdeckstoffrand (13) und Scheibenrand (11) nicht, sondern sind durch eine schmale Fuge (23) voneinander getrennt, wobei die Fuge (23) auch vom Kunststoffmaterial des Gießharz-Elements (14) ausgefüllt sein kann. Das Gießharz-Element (14) bildet in allen Fällen einen stabilisierenden umlaufenden Rahmen.

## Beschreibung

Die Erfindung betrifft ein Klapp- bzw. Faltverdeck für Kraftfahrzeuge wie Kabrioletts od.dgl., mit einem äußeren Verdeckbezug und mindestens einer in einem Ausschnitt desselben angeordneten Scheibe nach dem Oberbegriff des Anspruchs 1.

DE 197 24 592 C1 offenbart ein Fahrzeugverdeck, bei dem die Verdeck- bzw. Heckscheibe mit einem Verdeckflächenelement mittels eines PUR-Gießharz-Wulstelementes mechanisch fest und dicht verbunden ist, welches den Rand des Verdeckflächenelementes und den dazu benachbarten Rand der Verdeck- bzw. Heckscheibe beidseitig, d.h. innen- und außenseitig mechanisch fest und dicht einfaßt. Zur Realisierung eines solchen Verdecks werden die beiden Verdeckflächenelemente passend in ein geeignet ausgebildetes Werkzeug eingebracht, das Werkzeug dicht verschlossen und in den im Werkzeug vorhandenen Formhohlraum das PUR-Gießharz eingebracht. Nach dem Reaktionsablauf des PUR-Gießharzes wird die Form geöffnet und das entsprechende Verdeck bzw. Verdeckteil aus dem Formwerkzeug entnommen.

Der wesentliche Vorteil einer derartigen Verdeckausgestaltung ist es, dass die beiden Verdeckflächenelemente ohne aufwendige konstruktive Maßnahmen, wie insbesondere Nähen, miteinander verbindbar sind, und zwar auch in einer optisch durchaus ansprechenden Art und Weise. Die Einbindung einer Scheibe in den Ausschnitt eines Verdeckstoffes mittels eines PUR-Gießharz-Wulstelementes ist auch insbesondere für Hartglasscheiben von besonderem Vorteil, da diese grundsätzlich nicht wie flexible Kunststoffscheiben in den Verdeckstoff eingenäht werden können.

Was das ästhetische Erscheinungsbild derartiger Scheibeneinbindungen bei Betrachtung eines Verdecks von außen anbelangt, ist im Übergang vom äußeren Verdeckbezug zur Scheibe lediglich ein schmaler umlaufender Wulst geringer Höhe zu sehen, ansonsten nur Stoff und Glas.

Gleichwohl besteht der Wunsch nach einer weiteren Verfeinerung des um den Scheibenrand umlaufenden Übergangs zum äußeren Verdeckbezug. Die Erfüllung dieses Wunsches ist Aufgabe vorliegender Erfindung.

Eine erste Lösung der Aufgabe besteht prinzipiell darin, dass der umlaufende Rand des äußeren Verdeckbezugs mit einem Profil rahmenartig versehen ist, welches sich überwiegend oder gänzlich auf der zum Fahrzeuginnern weisenden Seite erstreckt. Das Profil ist vorzugsweise ein PUR-Profil, welches als Gießharz-Element in einem Formwerkzeug am Verdeckstoff angebracht wird. Das Profil kann auch die Randkante des Verdeckstoffausschnits umgreifen und auf diese Weise zu einer Erhöhung der Stabilität beitragen.

Auf die nach außen weisende umlaufende Fläche des äußeren Verdeckstoffs ist unter Vermittlung einer Klebstoffraupe die Scheibe mit ihrem Rand aufgeklebt. Im Überlappungsbereich von Scheibenrand und Ausschnittsrand des Verdeckbezugs ergibt sich somit - von innen nach außen - die Schichtfolge Verdeckstoff, Klebstoffraupe, Scheibe. Dadurch entsteht bei Betrachtung von außen der äußerst vorteilhafte Eindruck, als sei die Scheibe unmittelbar in den Verdeckstoff eingearbeitet.

Diese Ästhetik läßt sich noch weiter verfeinern, wenn man das Profil im Querschnitt im wesentlichen S- oder Z-förmig gestuft ausbildet, derart, dass die nach außen weisende Fläche eines ersten Schenkels eine Auflagefläche für den Verdeckstoffs ausbildet und ein zweiter Schenkel mit seiner in gleiche Richtung weisenden Fläche die Klebstoffraupe und den Scheibenrand trägt.

Die Höhe der Stufe zwischen den beiden Profilschenkeln ist dabei vorzugsweise etwa so gewählt, dass sich zwischen Scheibe und Verdeckstoff im Prinzip lediglich eine längs des Scheibenrandes umlaufende Schattenfuge ergibt. Die nach außen weisenden Flächen von Scheibe und Verdeckbezug können dabei bündig oder mit geringem Versatz zueinander verlaufen.

Als Klebstoff für das Einkleben der Scheibe in den mittels des Profils geschaffenen Rahmen kommt in erster Linie ein Polyurethan-Kleber in Betracht, welcher als Raupe auf einer der Klebeflächen aufgetragen und zur Fixierung kalt verpreßt wird. Alternativ kann man insbesondere auch einen HF-Kleber verwenden, d.h. einen mittels Hochfrequenz aushärtbaren Klebstoff. Die Verklebung - gleich welcher Art - hat im wesentlichen den Zweck, die beiden zu verbindenden Teile vorzufixieren und den Spalt zwischen ihnen gegen Eindringen von Luft, Feuchtigkeit und sonstigen Verunreinigungen abzudichten.

Bildet man den dem Verdeckbezugausschnitt zugeordneten Schenkel des Profils in der Wandstärke üppiger aus, kann man daran mittels druckknopfartiger Rastelemente zusätzlich den Ausschnittsrand eines inneren Verdeckbezugs (des sog. Himmels) an diesem Profil verankern.

Eine weitere Lösung der eingangs genannten Aufgabe besteht im Prinzip darin, den äußeren Verdeckbezug mit seinem Ausschnittsrand direkt mit der Scheibe zu verkleben und den Übergangsbereich Verdeckbezug/Scheibe mittels eines PUR-Gießharzprofils zu hinterschäumen bzw. zu hintergießen.

Dabei ist es vorteilhaft, wenn der Stoff des äußeren Verdeckbezugs im Anlagebereich auf der Scheibe einen zur Scheibe hin gerichteten Umbug aufweist, wobei der umgelegte Stoffabschnitt mit der Scheibe und vorzugsweise auch mit dem Verdeckstoff verklebt wird. Dies geschieht vorzugsweise im HF-Schweißverfahren mit einem hochfrequenz-aktivierbaren Klebstoff.

Das PUR-Profil, welches wiederum zur festen Verbindung von Scheibe und Verdeckbezug dient, während der HF-Verklebung im wesentlichen eine Dichtfunktion zukommt, eignet sich bei entsprechender Gestaltung auch hier zur Aufnahme von Steckverbindungsmitteln im Zusammenhang mit einer Himmelanbindung wie oben beschrieben.

Im übrigen versteht sich die Erfindung anhand von in den anliegenden Zeichnungen dargestellter Ausführungsbeispiele noch deutlicher. In den Zeichnungen ist jeweils ein Querschnitt durch den Verbindungsbereich Verdeckstoff/Scheibe dargestellt, und es zeigen:
- Fig. 1: eine besonders einfache Art der Scheibenbefestigung im äußeren Verdeckbezugausschnitt mit einem insgesamt im Querschnitt Z- oder S-förmigen Rahmenprofil,
- Fig. 2: die gleiche Anordnung mit einem erweiterten Rahmenprofil, welches den Ausschnitssrand des äußeren Verdeckbezugs einfasst,
- Fig. 3: eine Ausführungsform mit einer integrierten Himmelanbindung,
- Fig. 4: eine weitere Ausführungsform, die durch unmittelbare Auflage des Verdeckbezugrandes auf der Scheibenaußenseite gekennzeichnet ist,
- Fig. 5: eine der Ausführungsform nach Fig. 1 ähnliche weitere Ausgestaltung mit in das Rahmenprofil eingearbeiteten Metallbewehrungen.
- Fig. 6: eine Aufsicht von außen auf den Übergangsbereich Verdeckbezug/Scheibe einer weiteren Ausführungsform, die der in Fig. 4 dargestellten Ausführung ähnlich ist,
- Fig. 7: einen Querschnitt durch den Bereich längs der Schnittlinie VII-VII in Fig. 6, und
- Fig. 8: einen Querschnitt durch den Bereich längs der Schnittlinie VIII-VIII in Fig. 6.

In allen Figuren bezeichnet 10 eine insbesondere aus Hartglas bestehende Scheibe mit umlaufendem Scheibenrand 11. Der äußere Verdeckbezug ist mit 12 angegeben, sein umlaufender Ausschnittsrand mit 13. 14 bezeichnet ein formstabiles, insbesondere aus Kunststoff bestehendes Profil, das sich um den Verdeckbezugausschnitt umlaufend hinweg erstreckt. Mit dem Bezugszeichen 15 ist eine Klebstoffraupe angegeben, über die der Rand 11 der Glasscheibe 10 mit dem Profil 14 verklebt ist.

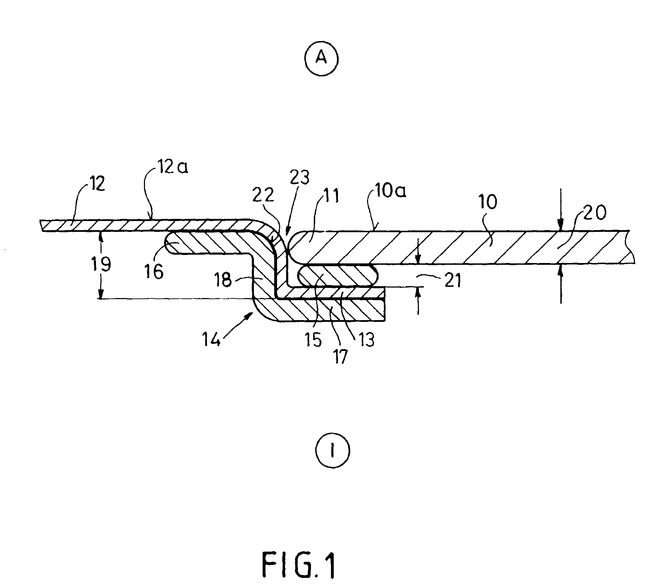

Im Ausführungsbeispiel nach Fig. 1 weist der Querschnitt des Profils 14 eine S- bzw. Z-Form auf mit einem ersten freien Schenkel 16, einem zweiten freien Schenkel 17 und einem diese stufenbildend stoffschlüssig miteinander verbindenden Steg 18. Die gesamte zur Fahrzeugaußenseite A weisende Fläche des Profils 14 ist mit der ins Fahrzeuginnere I weisenden Fläche des äußeren Verdeckbezugs 12 fest verbunden. Die bevorzugte Art dieser Verbindung besteht darin, dass das Profil 14 in einem Formwerkzeug erzeugt wird, in das der Verdeckbezugausschnitt eingelegt wird. Die Gießharzmasse wird in einen der Form des Profils 14 entsprechenden Formhohlraum eingespritzt. Dann läßt man sie aushärten, wobei sie sich mit dem Verdeckbezug verbindet.

Aufgrund der Querschnittsform des Profils 14 bildet dieses eine Stufe 19 aus. Die Höhe der Stufe ist gleich oder - wie beim dargestellten Ausführungsbeispiel - etwas größer als die Materialstärke 20 der Scheibe 10 zuzüglich der Dicke 21 des ausgehärteten Klebstoffs 15.

Man könnte die Dimensionierung der Stufe 19 auch so gestalten, dass die nach außen weisende Fläche 11 der Scheibe 10 und die nach außen weisende Flächen 13 des äußeren Verdeckbezugs 12 flächenbündig in einer Ebene zur Anordnung gelangen. Vorliegend ist jedoch zum Schutz des Verdeckbezugs 12 im Übergang vom ersten Profilschenkel 16 zum Steg 18 des Profils 14 ein relativ großer Radius 22 gewählt worden. Um dabei einen nur sehr schmalen Spalt 23 zwischen Scheibenrand 11 und Verdeckstoff 12 zu erzielen, ist daher die Scheibe 10 in Richtung auf den zweiten Schenkel 17 des Profils 14 hin geringfügig in die Stufe 19 eingesenkt.

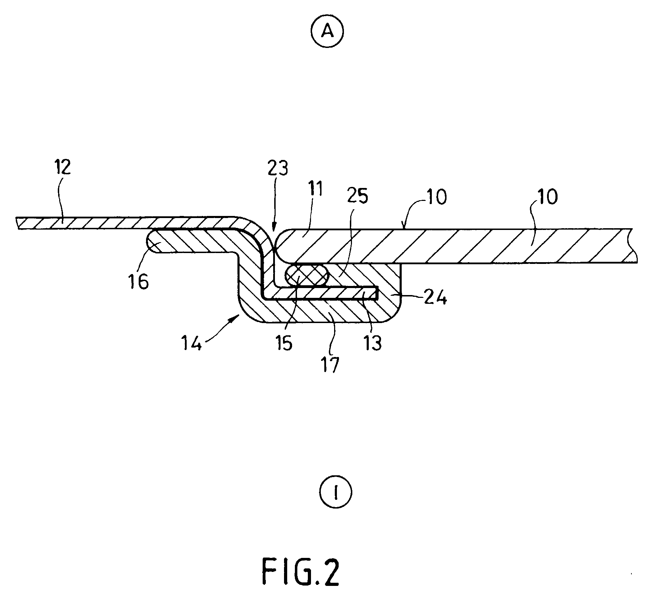

Die in Fig. 2 gezeigte Ausführungsform unterscheidet sich von der nach Fig. 1 dadurch, dass das Profil 14 nicht mit dem Rand 13 des Ausschnitts im Verdeckbezug 12 endet, sondern diesen durch Umgreifen einfaßt. Dazu ist an einen zweiten Steg 24 noch ein dritter, zurückweisender Schenkel 25 mit angeformt, der zwischen Scheibe 10 und Stoffrand 13 bis an die PUR-Raupe 15 eingegossen ist.

Die Herstellung der Anordnung geschieht im wesentlichen wie folgt: Die PUR-Raupe wird an der Scheibe 10 längs deren Randes 11 angebracht. Der Verdeckbezug 12 wird mit seinem umlaufenden Ausschnittsrand 13 kalt mit der PUR-Raupe verpresst, wodurch Scheibe 10 und Verdeckbezug 12 eine vorfixierte Verbindung erfahren. Sodann wird diese Anordnung in ein PUR-Gießwerkzeug eingegeben und unter Ausbildung des Profils 14 hinterschäumt.

Der PUR-Strang 15 dient im wesentlichen als Abdichtung der Verbindung Scheibe/Verdeckbezug, insbesondere zur Spaltabdichtung, damit durch den Spalt 23 weder Feuchtigkeit oder sonstige Verunreinigungen noch Luft ins Fahrzeuginnere eindringen können. Der mechanisch feste Zusammenhalt wird durch das Gießharz-Profil 14 gewährleistet. Ein weiterer Zweck der PUR-Raupe besteht darin, zu verhindern, dass beim Spritz- oder Schäumvorgang Gießharzmasse nicht unkontrolliert in den Spalt 23 eindringt.

Bezüglich der gebräuchlichen Begriffe 'Schäumen' und 'Hinterschäumen' ist auszuführen, dass es sich eher um einen Aushärtvorgang als um einen echten Aufschäumvorgang handelt, da das bevorzugt verwendete PUR-Gießharzsystem nur einen geringen Anteil (1-2%) Aufschäummittel enthält.

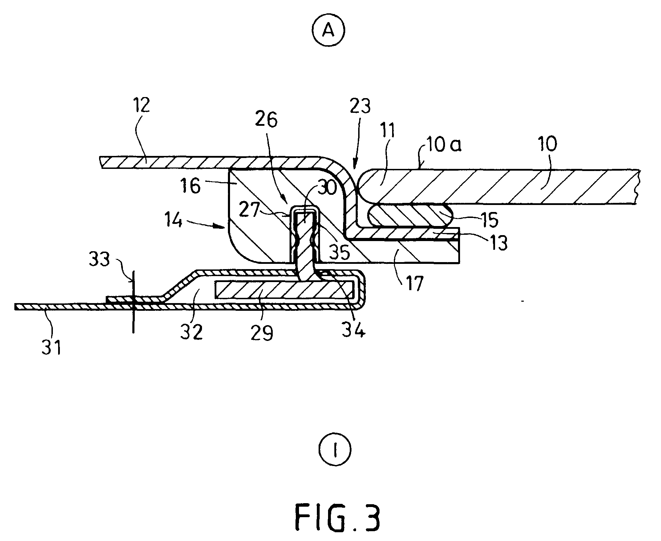

Die dritte, in Fig. 3 gezeigte Ausführung unterscheidet sich von der anhand der Fig. 1 beschriebenen im wesentlichen dadurch, dass der Schenkel 17 erheblich dicker ist als der Schenkel 16 des Profils 14. Auf diese Weise wird 'Fleisch' geschaffen für eine insgesamt mit 26 bezeichnete Steckverbindung zur - ggf. wieder lösbaren - Anbringung eines inneren Verdeckbezugs (Himmels) 31.

Die Steckverbindung 26 weist verdeckstoffseitig patrizenartige Steckorgane 30 auf, und in dem Profilschenkel 16 sind zum Fahrzeuginnenraum weisende Steckaufnahmen 27 angebracht. Zur verbesserten Verankerung der Steckorgane 30 sind in die Steckaufnahmen 27 vorzugsweise metallische Klammern 35 eingesetzt, beispielsweise bei der Herstellung des Gießharz-Profils 14 in dieses mit eingegossen.

Der scheibenseitige Rand des inneren Verdeckbezugs 31 bildet mittels eines Umschlags einen Hohlsaum 32 aus, der bei einer mit 33 bezeichneten Stelle fixiert, vorzugsweise vernäht ist. Der Hohlsaum 32 weist auf der zur Scheibe 10 zeigenden Seite fensterartige Öffnungen 34 auf, die es dem im Hohlsaum 32 eingebetteten Leistenelement 29 erlauben, seine patrizenartigen Steckorgane 30 aus dem Hohlsaum 32 austreten zu lassen.

Die Steckorgane 30 sind einstückig-stoffschlüssig am Grundquerschnitt des Leistenelements 29 angeformt, und zwar - wie dargestellt - aus dem Metallstreifen des Leistenelements 29 ausgeklinkt und aus dessen Ebene herausgebogen. Jedoch kann das Leistenelement 29 mit den Steckorganen 30 auch ein insbesondere einteiliges Kunststoff-Spritzgießteil sein.

Bevorzugt sind längs des scheibenseitigen Randes des inneren Verdeckbezugs 31 in Abständen mehrere zapfenartige Steckorgane 30 und entsprechend Steckaufnahmen 27 im Profil 14 vorgesehen. Es ist somit ohne nennenswerte Schwächung des Profils 14 möglich, einen Himmel mit sehr sauberem, dem Scheibenrand folgendem Anschluß an das Profil und somit an der Scheibenanordnung anbinden zu können.

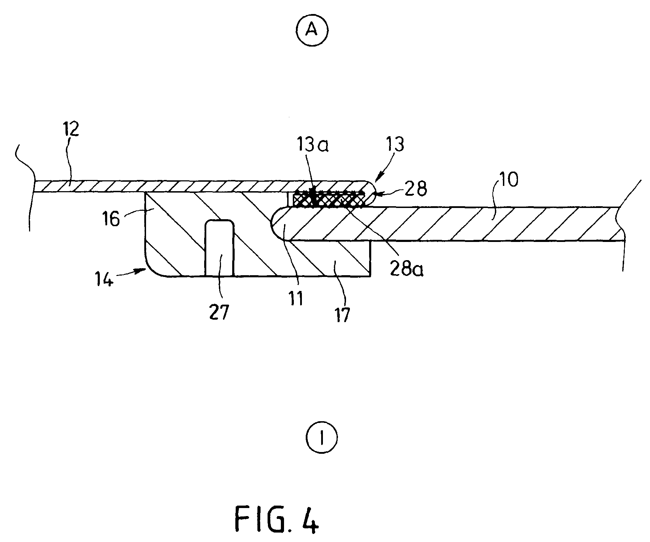

Das vierte Ausführungsbeispiel unterscheidet sich gemäß Fig. 4 von den übrigen Ausführungsformen vor allem dadurch, dass der Scheiben-Ausschnittsrand 13 des äußeren Verdeckbezugs 12 nicht ins Fahrzeuginnere I hin eingezogen ist, sondern außen auf dem Rand 11 der Scheibe 10 zur Auflage kommt. Hierdurch läßt sich eine noch weitere Verfeinerung der Ästhetik des Übergangs Verdeckstoff/Scheibe erreichen, und zwar mit sogar noch weiter vermindertem technischem Aufwand.

Der Rand 13 des zur Aufnahme der Scheibe 10 bestimmten Ausschnitts im äußeren Verdeckbezug 12 weist einen Umbug auf, indem ein randseitiger schmaler Stoffstreifen 13a nach einwärts - zur Scheibe 10 hin - umgelegt ist. In diesem Bereich ist der Verdeckstoffrand 13 mit einem unter Einwirkung von Hochfrequenz aktivierbaren Kleber ausgerüstet. In Fig. 4 ist dies mit spezieller Schraffur angedeutet.

Der äußere Verdeckbezug 12 wird auf diese Weise zunächst an die Scheibe 10 angeschweißt. Auch hier dient die Verschweißung in erster Linie Vorfixierungs- und Dichtungszwecken; ein betriebsmäßig ausreichend fester mechanischer Zusammenhalt wird durch Angießen oder Hinterschäumen mit dem PUR-Profil 14 bewirkt.

Die miteinander HF-verschweißten Verdeckteile 10 und 12 werden in das Gießharz-Formwerkzeug eingelegt. Dann wird Gießharz in einen der Form des Profils 14 entsprechenden Formhohlraum eingespritzt. Nach dem Aushärten der Gießmasse ist die in Fig. 4 gezeigte Verbindungsanordnung fertiggestellt. Man sieht hier insbesondere den scharf abgegrenzten, sauberen Übergang vom Verdeckstoff 12 zur Scheibe 10 auf der Verdeckaußenseite A. In diesem Zusammenhang sei erwähnt, dass der Schenkel 17 des Gießharzprofils 14 - wie dargestellt - sich zur Scheibenmitte auch etwa nur soweit erstreckt wie der Verdeckstoffumbug 13/13a.

Mit 27 ist noch eine optionale Steckaufnahme für Steckrastorgane für eine Himmelanbindung bezeichnet. Insoweit sei Bezug genommen auf die obigen Erläuterungen anhand von Fig. 3.

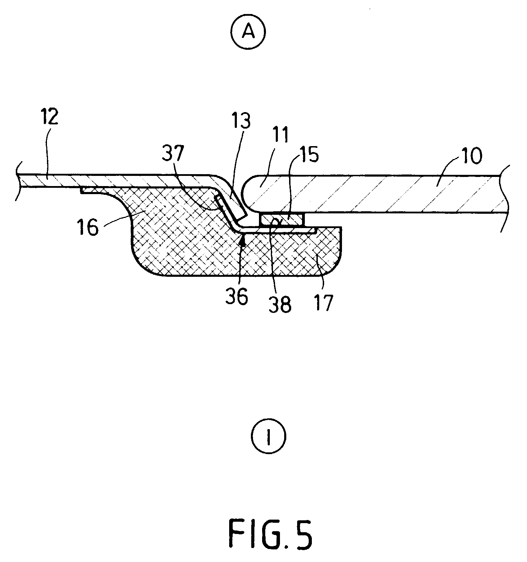

In Fig. 5 ist eine weitere Ausführungsform der Erfindung dargestellt. Sie ist der in Fig. 1 gezeigten ähnlich. Im Unterschied bzw. in Ergänzung dazu sind in das Profil 14 verstärkende Metallbewehrungen 36 eingearbeitet. Soweit von mehreren Bewehrungen die Rede ist, sei angemerkt, dass sich in der Regel wenigstens vier Abschnitte längs der Scheibenober- und -unterränder sowie der beiden Seitenränder erstrecken werden, was fertigungstechnisch günstiger ist, als einen umlaufenden ,Bewehrungsrahmen' vorzusehen.

Wenigstens ein mit 37 bezeichneter Flächenabschnitt der Metallbewehrungen 36 erstreckt sich im Bereich der Klebeverbindung zur Scheibe 10 zumindest annähernd bis an die dieser zugewandte Oberfläche 14a des Profils 14. Lediglich eine dünne Kunststoffhaut des Profils 14 deckt die Einlage 36 nach außen hin ab, so dass sie nicht sichtbar ist.

Bevorzugt bestehen die Metallbewehrungen 36 aus gelochten Blechstreifen. Hierdurch kann das Kunststoffmaterial des Profils 14 durch die Löcher hindurch fließen. Dies wiederum ermöglicht die außenflächennahe feste Verankerung der Bewehrungen 36. Dies gilt auch für den Randbereich 13 des äußeren Verdeckbezugs 12, in den sich jeweils ein Schenkel bzw. Abschnitt 37 eines Bewehrungsstreifens 36 hin erstreckt.

Die Metallbewehrungen 36 erfüllen neben dem Zweck der Versteifung und Stabilisierung des 14 auch noch die Aufgabe, ein Auswechseln der Scheibe 10 im Schadensfall auf einfache Weise zu ermöglichen. Dann nämlich dient die zur Klebstoffraupe 15 weisende Fläche 38, die vorzugsweise eben ist, als Auflagefläche für ein Schneidwerkzeug wie Messer od.dgl., mit dem die Verbindung zwischen dem Profil 14 und dem Scheibenrand 11 aufgetrennt wird. Nach dem Reinigen der Fläche 38 kann dann eine neue Scheibe 10 in das Profil 14 eingeklebt werden.

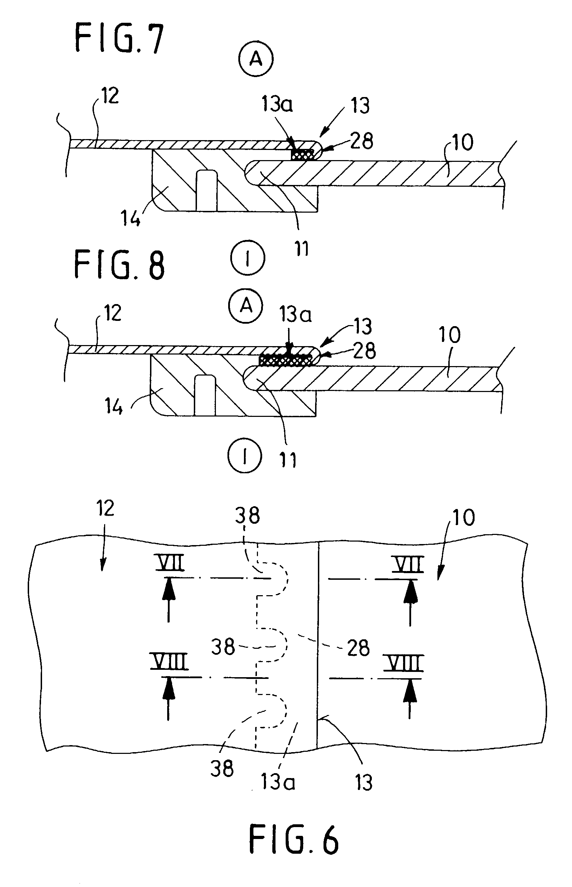

In den Figuren 6 bis 8 ist eine weitere Ausgestaltung der Erfindung gezeigt.

Fig. 8 stellt eine Ansicht von außen auf den Übergangsbereich vom Verdeckbezug 12 zur Scheibe 10 dar. Hier wird wie bei dem Beispiel nach Fig. 4 der Verdeckstoffrand 13 von einem Umbug 28 gebildet. Zur Fixierung des Umbugs ist der umgelegte Stoffabschnitt 28a wie üblich mit dem Verdeckstoff 12 verklebt. Die Verklebung des Umbugs 28 mit der Scheibe erfolgt jedoch mittels des Gießharz-Elements 14 selbst. Hierzu ist in die zwischen dem Verdeckstoff 12 und dem umgelegten Abschnitt 28a des Umbugs 28 gebildete Fuge vom Werkstoff des Gießharz-Elements 14 eingespritzt bzw. eingegossen.

Dies geschieht dadurch, dass Scheibe und Verdeckbezug in korrekter Lage zueinander in die Form des Gießwerkzeugs eingelegt werden, dessen Formhohlraum dann mit Gießharz gefüllt wird, so dass das Gießharz-Element wie in Fig. 7 und 8 gezeigt entsteht. Dabei dringt das Kunststoffmaterial in den Fugenbereich des Umbugs 28 ein und verklebt den Verdeckstoff 12 auf diese Weise mit der Scheibe 10, so dass ein zusätzlicher Klebstoff nicht erforderlich ist.

Zur Verbesserung der Haftung des Kunststoffmaterials der Rand 28b des umgelegten Abschnitts 28a des Umbugs 28 mit Einschnitten 38 zur Einlagerung 38 von Werkstoff des Gießharz-Elements 14 versehen.

Die Profile 14 sind bevorzugt aus einem Gießharz-System aus Polyurethan (PUR) aufgebaut und weisen bevorzugt eine Härte in der Größenordnung von 40 Shore D auf, so dass sie also nicht gummiartig weich, sondern relativ hart und formbeständig sind. Bei Bedarf und Anpassung an die Erfordernisse könnte das PUR auch gegen einen anderen Kunststoff ausgetauscht werden. Insoweit ist der Werkstoff PUR im Rahmen der vorliegenden Erfindung nicht zwingend.

Kurz zusammengefaßt erreicht die Erfindung, dass bei Betrachtung von außen der ästhetisch vorteilhafte Eindruck entsteht, als sei die Scheibe 10 unmittelbar in den Verdeckstoff 12 eingearbeitet, werden drei grundlegende Lösungen vorgeschlagen. Entweder ist auf den nach außen weisenden umlaufenden Rand 11 des äußeren Verdeckstoffs 12 die Scheibe 10 mit ihrem Rand 11 aufgeklebt oder der Verdeckstoffrand 13 auf den Scheibenrand 11, wobei das Verkleben auch allein oder zusätzlich durch das Kunststoffmaterial des Gießharz-Elements 14 erfolgen kann. Bei der dritten Alternative überlappen sich Verdeckstoffrand 13 und Scheibenrand 11 nicht, sondern sind durch eine schmale Fuge 23 voneinander getrennt, wobei die Fuge 23 auch vom Kunststoffmaterial des Gießharz-Elements 14 ausgefüllt sein kann. Das Gießharz-Element 14 bildet in allen Fällen einen stabilisierenden umlaufenden Rahmen.

## Patentansprüche

1. Klapp- bzw. Faltverdeck für Kraftfahrzeuge wie Kabrioletts od.dgl., mit einem äußeren Verdeckbezug (12) und mindestens einer in einem Ausschnitt desselben angeordneten Scheibe (10), deren umlaufender Rand (11) mittels eines Gießharz-Elements mit dem umlaufenden Rand (13) des äußeren Verdeckbezugs (12) verbunden ist, dadurch gekennzeichnet, dass der umlaufende Rand (13) des äußeren Verdeckbezugs (12) mit einem rahmenartig umlaufenden Profil (14) als Gießharz-Element versehen ist, welches sich zumindest überwiegend auf der zum Fahrzeuginnern (I) weisenden Seite erstreckt.

2. Verdeck nach Anspruch 1, dadurch gekennzeichnet, dass sich das rahmenartige Profil (14) gänzlich auf der zum Fahrzeuginnern (I) weisenden Seite der Scheiben-Verdeckbezug-Anordnung erstreckt.

3. Verdeck nach Anspruch 1 oder 2, dadurch gekennzeichnet, dass das Profil (14) ein PUR-Profil ist, das als Gießharz-Element in einem Formwerkzeug am äußeren Verdeckbezug (12) anbringbar, insbes. angießbar ist.

4. Verdeck nach Anspruch 1, dadurch gekennzeichnet, dass der äußere Verdeckbezug (12) mit seinem Ausschnittsrand (13) unmittelbar mit der Scheibe (10) verklebt ist.

5. Verdeck nach einem der vorherigen Ansprüche, dadurch gekennzeichnet, dass der Übergangsbereich Verdeckbezug/Scheibe (12/10) mittels eines Gießharzprofils (14) hinterschäumt bzw. hintergossen ist.

6. Verdeck nach einem der Ansprüche 1 bis 5, dadurch gekennzeichnet, dass das Profil (14) auch die Randkante (13) des Verdeckstoffausschnitts umgreift.

7. Verdeck nach einem der vorherigen Ansprüche, dadurch gekennzeichnet, dass das Profil (14) im Querschnitt im wesentlichen S- oder Z-förmig gestuft ausgebildet, derart, dass die nach außen weisende Fläche eines ersten Schenkels (16) eine Auflagefläche für den Verdeckstoff (12) ausbildet.

8. Verdeck nach Anspruch 7, dadurch gekennzeichnet, dass ein zweiter Schenkel (17) mit seiner in gleiche Richtung weisenden Fläche einen Klebstoffstrang (15) und den Scheibenrand (11) trägt.

9. Verdeck nach Anspruch 7 oder 8, dadurch gekennzeichnet, dass die Höhe der Stufe (19) zwischen den beiden Profilschenkeln (16, 17) derart gewählt ist, dass sich zwischen Scheibe (10) und Verdeckstoff (12) eine längs des Scheibenrandes (11) umlaufende Schattenfuge (Spalt 23) ergibt.

10. Verdeck nach einem der Ansprüche 9, dadurch gekennzeichnet, dass der Spalt (23) zwischen dem Scheibenrand (11) und dem Verdeckstoffrand (13) mit Werkstoff des Profils (14) ausgefüllt ist.

11. Verdeck nach einem der vorherigen Ansprüche, dadurch gekennzeichnet, dass die nach außen weisenden Flächen von Scheibe (10) und Verdeckbezug (12) allenfalls mit geringem Versatz zueinander, vorzugsweise jedoch bündig verlaufen.

12. Verdeck nach einem der vorherigen Ansprüche, dadurch gekennzeichnet, dass der Klebstoff ein Polyurethan-Kleber ist, der als Raupe (15) auf eine der Klebeflächen aufgetragen und zur Fixierung kalt verpresst ist.

13. Verdeck nach einem der Ansprüche 1 bis 11, dadurch gekennzeichnet, dass der Kleber ein mittels Hochfrequenz aushärtbarer HF-Kleber ist.

14. Verdeck nach einem der vorherigen Ansprüche, dadurch gekennzeichnet, dass in dem dem äußeren Verdeckbezug (12) zugeordneten Schenkel (16) des Profils (14) Steckaufnahmen (27) für dem Ausschnittsrand eines inneren Verdeckbezugs (31) (des sog. Himmels) zugeordnete, druckknopfartige Rastelemente (Steckorgane 30) vorgesehen sind.

15. Verdeck nach Anspruch 4, dadurch gekennzeichnet, dass der äußere Verdeckbezug (12) im Anlagebereich auf der Scheibe (10) einen zur Scheibe (10) hin gerichteten Umbug (28) aufweist, dessen umgelegter Stoffabschnitt (28a) mit der Scheibe verklebt ist.

16. Verdeck nach Anspruch 15, dadurch gekennzeichnet, dass der umgelegte Stoffabschnitt (28a) auch mit dem äußerem Verdeckbezug (12) selbst verklebt ist.

17. Verdeck nach Anspruch 15 oder 16, dadurch gekennzeichnet, dass die Verklebung im HF-Schweißverfahren mit einem hochfrequenz-aktivierbaren Klebstoff erfolgt.

18. Verdeck nach Anspruch 15, dadurch gekennzeichnet, dass die Verklebung mittels des Gießharz-Elements (14) selbst erfolgt.

19. Verdeck nach Anspruch 17, dadurch gekennzeichnet, dass die zwischen dem Verdeckstoff (12) und dem umgelegten Abschnitt (28a) des Umbugs (28) gebildete Fuge vom Werkstoff des Gießharz-Elements (14) hinterspritzt bzw. hinterschäumt ist.

20. Verdeck nach Anspruch 18 oder 19, dadurch gekennzeichnet, dass der Rand (28b) des umgelegten Abschnitts (28a) mit Einschnitten (38) zur Einlagerung (38) von Werkstoff des Gießharz-Elements (14) versehen ist.

21. Verdeck nach einem der vorherigen Ansprüche, dadurch gekennzeichnet, dass in das Profil (14) verstärkende Metallbewehrungen (36) eingearbeitet sind.

22. Verdeck nach Anspruch 21, dadurch gekennzeichnet, dass sich zumindest Flächenabschnitte (37) der Metallbewehrungen (36) im Bereich der Klebeverbindung zur Scheibe annähernd bis an die dieser zugewandte Oberfläche (14a) des Profils (14) erstrecken.

23. Verdeck nach Anspruch 21 oder 22, dadurch gekennzeichnet, dass die Metallbewehrungen (36) aus gelochten Blechstreifen bestehen.

24. Verdeck nach einem der Ansprüche 21 bis 23, dadurch gekennzeichnet, dass sich die Metallbewehrungen (36) auch in den Randbereich (13) des äußeren Verdeckbezugs (12) erstrecken.
